# EUROPEAN PATENT APPLICATION

(11) **EP 4 818 134 A1**
(43) Date of publication of application: **07.10.2026**
(21) Application number: 25887711.7
(22) Date of filing: 30.06.2025
(51) Int. Cl.: C03C 17/34, G02B 1/14, G09F 9/30, H04M 1/18, H04M 1/02, G06F 1/16

(54) **GLASS STRUCTURAL MEMBER AND ELECTRONIC DEVICE**

(30) Priority: 06.11.2024 CN 202411582258
(71) Applicant: Huawei Technologies Co., Ltd., Shenzhen, Guangdong 518129 (CN)
(72) Inventor: LI, Fengxiang, Shenzhen, Guangdong 518129 (CN); ZHANG, Yanming, Shenzhen, Guangdong 518129 (CN); MA, Tao, Shenzhen, Guangdong 518129 (CN); HUANG, Yihong, Shenzhen, Guangdong 518129 (CN); XING, Chong, Shenzhen, Guangdong 518129 (CN); YUAN, Jiansong, Shenzhen, Guangdong 518129 (CN)
(74) Representative: Goddar, Heinz J.
(86) International application number: PCT/CN2025/105641
(87) International publication number: WO 2026/097897

(57) **Abstract**

This application provides a glass structural component and an electronic device. The glass structural component includes a glass substrate, and a first optical scratch-resistant stacked layer, a second optical scratch-resistant stacked layer, and a first superhard layer that are sequentially stacked on a side of the glass substrate. The first optical scratch-resistant stacked layer is formed by alternately stacking two types of material layers with different refractive indexes, the second optical scratch-resistant stacked layer is formed by stacking three types of material layers with different refractive indexes, and the first superhard layer is diamond-like carbon doped with at least one of elements: silicon, aluminum, titanium, zirconium, molybdenum, and nitrogen. The glass structural component has good scratch-resistant performance, has little change in optical performance compared with the glass substrate, and can better meet a long-term use requirement for a housing of the electronic device.

## Description

This application claims priority to Chinese Patent Application No. 202411582258.7, filed with the China National Intellectual Property Administration on November 6, 2024 and entitled "GLASS STRUCTURAL COMPONENT AND ELECTRONIC DEVICE", which is incorporated herein by reference in its entirety.

### TECHNICAL FIELD

This application relates to the field of glass technologies, and specifically, to a glass structural component and an electronic device.

### BACKGROUND

Glass is a common material for display cover plates in electronic devices such as mobile phones or tablet computers. To reduce scratches on a display, a superhard film (for example, a diamond-like carbon film) is usually coated on a surface of a glass substrate. In order not to affect optical transmissivity of the glass substrate, the diamond-like carbon film is usually made to be thin, but it is difficult for the diamond-like carbon film to provide good effect of scratch resistance against high-hardness sand particles. Therefore, it is necessary to provide a glass structural component that can have both good scratch resistance and optical performance.

### SUMMARY

In view of this, embodiments of this application provide a glass structural component and an electronic device. Through control of a specific coating layer on a surface of the glass structural component, it is ensured that the glass structural component has good scratch resistance performance and optical performance.

Specifically, a first aspect of embodiments of this application provides a glass structural component, including:
a glass substrate;
a first optical scratch-resistant stacked layer, disposed on a side of the glass substrate, where the first optical scratch-resistant stacked layer includes at least one first refractive index material layer and at least one second refractive index material layer that are alternately stacked, and a refractive index of the first refractive index material layer is greater than a refractive index of the second refractive index material layer;
a second optical scratch-resistant stacked layer, disposed on a side that is of the first optical scratch-resistant stacked layer and that faces away from the glass substrate, where the second optical scratch-resistant stacked layer includes at least one third refractive index material layer, at least one fourth refractive index material layer, and at least one fifth refractive index material layer that are stacked, and refractive indexes of the third refractive index material layer, the fourth refractive index material layer, and the fifth refractive index material layer are in descending order; and
a first superhard layer, disposed on a side that is of the second optical scratch-resistant stacked layer and that faces away from the first optical scratch-resistant stacked layer, where the first superhard layer is diamond-like carbon including a doping element, and the doping element includes at least one of: silicon, aluminum, titanium, zirconium, molybdenum, tungsten, and nitrogen.

The glass structural component uses the diamond-like carbon including a specific doping element as a superhard layer on a surface. In comparison with use of undoped diamond-like carbon as a superhard layer, a surface layer of the glass structural component has a high hardness, and scratch resistance performance of the glass structural component can be improved. In addition, the doping element can reduce impact of a decrease in an optical transmittance caused by the undoped diamond-like carbon. Moreover, the first optical scratch-resistant stacked layer formed by alternately stacking the two types of film layers with different refractive indexes and the second optical scratch-resistant stacked layer formed by stacking the three types of film layers with different refractive indexes are disposed between the glass substrate and such the first superhard layer. The two optical stacked layers may be thick and basically optical transparent layers, and both have good scratch resistance. The second optical scratch-resistant stacked layer has excellent scratch resistance. Existence of the first optical scratch-resistant stacked layer and the second optical scratch-resistant stacked layer can effectively improve durable scratch resistance of the glass structural component with the first superhard layer on a surface against a high-hardness object. Therefore, the glass structural component can have a high hardness, good scratch resistance, and optical performance (for example, high transmissivity and a low color difference).

In an implementation of this application, the refractive index of the first refractive index material layer is greater than or equal to 1.8, and the refractive index of the second refractive index material layer is less than or equal to 1.60. The first optical scratch-resistant stacked layer with good optical transmissivity and scratch resistance can be obtained by alternately stacking the two types of material layers with refractive indexes respectively in the two ranges, and the first optical scratch-resistant stacked layer has better optical transmissivity.

In an implementation of this application, the refractive index of the third refractive index material layer is greater than 1.80, the refractive index of the fourth refractive index material layer ranges from 1.60 to 1.80, and the refractive index of the fifth refractive index material layer is less than 1.60. The second optical scratch-resistant stacked layer with good optical transmissivity and good scratch resistance can be obtained by alternately stacking the three types of material layers with different refractive indexes respectively in the three ranges, and the second optical scratch-resistant stacked layer has better scratch resistance.

In an implementation of this application, the first refractive index material layer includes one of: a silicon nitride layer, an aluminum nitride layer, a silicon aluminum nitride layer, a silicon oxynitride layer, an aluminum oxynitride layer, and a silicon aluminum oxynitride layer. The second refractive index material layer includes one of: a silicon oxide layer, an aluminum oxide layer, a silicon aluminum oxide layer, a silicon oxynitride layer, an aluminum oxynitride layer, and a silicon aluminum oxynitride layer. Chemical composition of silicon oxynitride, aluminum oxynitride, and silicon aluminum oxynitride may be adjusted and controlled to implement refractive indexes in different ranges.

In an implementation of this application, the third refractive index material layer includes one of: a silicon nitride layer, an aluminum nitride layer, a silicon aluminum nitride layer, and a titanium oxide layer. The fourth refractive index material layer includes one of: a silicon oxynitride layer, an aluminum oxynitride layer, and a silicon aluminum oxynitride layer. The fifth refractive index material layer includes one of: a silicon oxide layer, an aluminum oxide layer, and a silicon aluminum oxide layer. These materials selected by the third refractive index material layer have a high refractive index, and have good wear resistance. Chemical composition of silicon oxynitride, aluminum oxynitride, and silicon aluminum oxynitride may be adjusted and controlled to implement the refractive index of the fourth refractive index material between 1.60 and 1.80.

In some implementations of this application, a surface layer that is of the first optical scratch-resistant stacked layer and that is close to the second optical scratch-resistant stacked layer is the first refractive index material layer, and the first refractive index material layer is in contact with the fourth refractive index material layer or the fifth refractive index material layer; or a surface layer that is of the first optical scratch-resistant stacked layer and that is close to the second optical scratch-resistant stacked layer is the second refractive index material layer, and the second refractive index material layer is in contact with the third refractive index material layer or the fourth refractive index material layer. In this way, an overall stacked structure of the first optical scratch-resistant stacked layer and the second optical scratch-resistant stacked layer has high optical transmissivity.

In an implementation of this application, a sum of thicknesses of the first optical scratch-resistant stacked layer and the second optical scratch-resistant stacked layer is in a range of 500 nm to 3000 nm. In this case, the stacked structure including the first optical scratch-resistant stacked layer and the second optical scratch-resistant stacked layer can effectively improve durable scratch resistance of the entire glass structural component, and the first optical scratch-resistant stacked layer and the second optical scratch-resistant stacked layer can be securely combined on the glass substrate.

In an implementation of this application, a thickness of the first superhard layer is in a range of 1 nm to 100 nm. The first superhard layer with the thickness of 100 nm or lower improves a hardness of a surface on a side of the glass structural component without affecting optical transmissivity and appearance hue of the glass structural component.

In an implementation of this application, in the first superhard layer, a doping concentration of the doping element is less than or equal to 20 wt%. In this way, it can be ensured that the hardness and optical transmissivity of the doped diamond-like carbon are improved without damaging a basic structure of the diamond-like carbon.

In some implementations of this application, a second superhard layer is further disposed on a side that is of the first superhard layer and that faces away from the second optical scratch-resistant stacked layer, and the second superhard layer and the first superhard layer are made of different materials. Existence of the second superhard layer helps ensure that the first superhard layer has a long-term high hardness.

In an implementation of this application, the second superhard layer includes one of silicon nitride, silicon carbide, silicon carbonitride, and CNₓ₁, and x1 is in a range of (0, 4]. Disposing the second superhard layer made of such a material between the first superhard layer and the second optical scratch-resistant stacked layer helps improve high hardness durability of the first superhard layer. Through cooperation of the second superhard layer and the first superhard layer, durable scratch resistance of the surface layer of the glass structural component against a high-hardness object is improved.

In an implementation of this application, a thickness of the second superhard layer is in a range of 1 nm to 50 nm. The second superhard layer with an appropriately low thickness helps improve high hardness durability of the first superhard layer, without affecting appearance effect of the entire glass structural component 100 because the second superhard layer is also a film layer with a high optical transmittance.

In some implementations of this application, the glass structural component further includes an anti-fingerprint layer, and the anti-fingerprint layer is located on a side that is of the second superhard layer and that faces away from the first superhard layer. The anti-fingerprint layer is mainly used to reduce a probability that a finger of a user leaves smudges on the glass structural component, to ensure a clean appearance of the glass structural component.

In other implementations of this application, the glass structural component further includes an anti-fingerprint layer, and the anti-fingerprint layer is located on a side that is of the first superhard layer and that faces away from the second optical scratch-resistant stacked layer. The anti-fingerprint layer is mainly used to reduce a probability that a finger of a user leaves smudges on the glass structural component, to ensure a clean appearance of the glass structural component.

In an implementation of this application, a Mohs hardness of a surface on a side that is of the glass structural component and that is away from the glass substrate is greater than or equal to 7. The surface on the side that is of the glass structural component and that is away from the glass substrate has a high Mohs hardness, and has good scratch resistance.

In an implementation of this application, a nano-indentation hardness of the side that is the glass structural component and that is away from the glass substrate is 14 GPa or higher at an indentation depth greater than 150 nm. The high nano-indentation hardness reflects that the glass structural component has good deep scratch resistance or durable scratch resistance against a high-hardness object.

In an implementation of this application, an average transmittance of the glass structural component in a visible light region is 88% or higher. After a film layer structure that includes the first optical scratch-resistant stacked layer, the second optical scratch-resistant stacked layer, and the first superhard layer is disposed on a side of the glass substrate, an obtained glass structural component may still have a high visible light transmittance, and is particularly suitable for a display cover plate, a camera protection cover plate, and the like that have a high transparency requirement.

In an implementation of this application, a color coordinate offset value △E of the glass structural component relative to the glass substrate is less than 1.5. This indicates that appearance hue of the glass structural component is not obviously changed compared with an unprocessed glass substrate.

A second aspect of embodiments of this application provides an electronic device, including a housing assembled outside the electronic device and a circuit board located inside the housing. The housing includes the glass structural component according to the first aspect of embodiments of this application.

In some implementations of this application, the housing includes a display cover plate assembled on a front side of the electronic device, and the display cover plate uses the glass structural component. In some other implementations of this application, the housing includes a rear cover assembled on a rear side of the electronic device, and the rear cover uses the glass structural component. In some other implementations of this application, the electronic device further includes a camera assembly located inside the housing, the housing includes a camera protection cover plate, the camera protection cover plate covers the camera assembly, and the camera protection cover plate uses the glass structural component.

One or more of the display cover plate, the rear cover, and the camera protection cover plate of the housing of the electronic device may use the glass structural component. Because the glass structural component has good wear resistance and scratch resistance, and little change in optical performance compared with a glass substrate, the housing that is of the electronic device and that uses the glass structural component is not easily scratched or worn in a use process, has a long service life, and has prominent market competitiveness. The electronic device may include but is not limited to a mobile phone, a tablet computer, a notebook computer, a wearable device, or the like.

### BRIEF DESCRIPTION OF DRAWINGS

FIG. 1 is a diagram of a front-side structure of an electronic device according to an embodiment of this application;
FIG. 2 is a diagram of a rear-side structure of an electronic device according to an embodiment of this application;
FIG. 3a is a diagram of a structure of a glass structural component according to an embodiment of this application;
FIG. 3b is a diagram of another structure of a glass structural component according to an embodiment of this application;
FIG. 4 is a diagram of still another structure of a glass structural component according to some implementations of this application; and
FIG. 5 is a diagram of yet another structure of a glass structural component according to some other implementations of this application.

### DESCRIPTION OF EMBODIMENTS

The following describes embodiments of this application with reference to accompanying drawings in embodiments of this application.

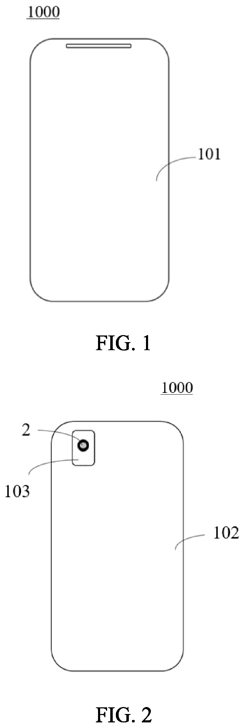

Refer to FIG. 1 and FIG. 2. FIG. 1 is a diagram of a front-side structure of an electronic device according to an embodiment of this application. FIG. 2 is a diagram of a rear-side structure of the electronic device according to an embodiment of this application. The electronic device 1000 may include but is not limited to a mobile phone (cellphone), a notebook computer (notebook computer), a tablet computer (tablet personal computer), a personal digital assistant (personal digital assistant), a wearable device (wearable device, for example, a smart band or a watch), a virtual reality (Virtual Reality, VR) device, a vehicle-mounted device (mobile device), or the like. An example in which the electronic device 1000 is a mobile phone is used for description in this embodiment of this application.

The electronic device 1000 includes a housing assembled outside the electronic device and a circuit board located inside the housing. The housing includes a display cover plate 101 assembled on a front side of the electronic device 1000 and a rear cover 102 assembled on a rear side of the electronic device 1000. The display cover plate 101 covers a display to protect the display. The display cover plate 101 and/or the rear cover 102 may use a glass structural component. Specifically, the display cover plate 101 may be completely or partially manufactured by using the glass structural component, and the rear cover 102 may be completely or partially manufactured by using the glass structural component. The rear cover 102 may cover only the rear side (a side facing away from the display) of the electronic device 1000, or may cover both the rear side and a side frame of the electronic device 1000. Optionally, the rear cover 102 may cover all side frames around the electronic device, or may cover a part of side frames.

In some implementations of this application, as shown in FIG. 2, the electronic device 1000 further includes a camera assembly 2 located inside the housing. The housing may include a camera protection cover plate 103. The camera protection cover plate 103 covers the camera assembly 2, and is configured to protect the camera assembly 2. The camera protection cover plate 103 may use a glass structural component. Similarly, the camera protection cover plate 103 may partially or completely use the glass structural component. A disposition position of the camera protection cover plate 103 may be determined based on a disposition position of the camera assembly 2. The camera protection cover plate 103 may be located on the front side of the electronic device 1000, or may be located on the rear side of the electronic device 1000. In FIG. 2, an example in which the camera assembly 2 is located on the rear side of the electronic device 1000 is used. In some implementations of this application, the camera protection cover plate 103, and the display cover plate 101 or the rear cover 102 may be of a split structure. In some other implementations of this application, the camera protection cover plate 103, and the display cover plate 101 or the rear cover 102 may alternatively be of an integrated structure.

In an implementation of this application, any one of the display cover plate 101, the rear cover 102, and the camera protection cover plate 103 in the electronic device 1000 may use a glass structural component, or any two of them may use glass structural components, or all of them may use glass structural components.

Currently, to improve scratch resistance of various components (for example, the display cover plate 101 and the camera protection cover plate 103) that use glass in the electronic device 1000, a superhard film made of diamond-like carbon is usually coated on a surface on a side of the glass substrate. For example, glass that covers the display and is used as the display cover plate 101 is usually coated with a diamond-like carbon film on a surface on a side that is of the glass and that faces away from the display. The diamond-like carbon film is usually thin (less than 100 nm, and commonly from 3 nm to 50 nm). First, this is because it is difficult to implement thick deposition of diamond-like carbon. Second, if the diamond-like carbon film is made to be thick, manufacturing costs are greatly increased, light transmission of the glass substrate is greatly affected, and appearance effect of the electronic device is affected. Therefore, an embodiment of this application provides a glass structural component that can have good wear resistance, scratch resistance performance, and optical transmissivity, to better meet a use requirement for the electronic device 1000.

The following describes the glass structural component provided in this embodiment of this application.

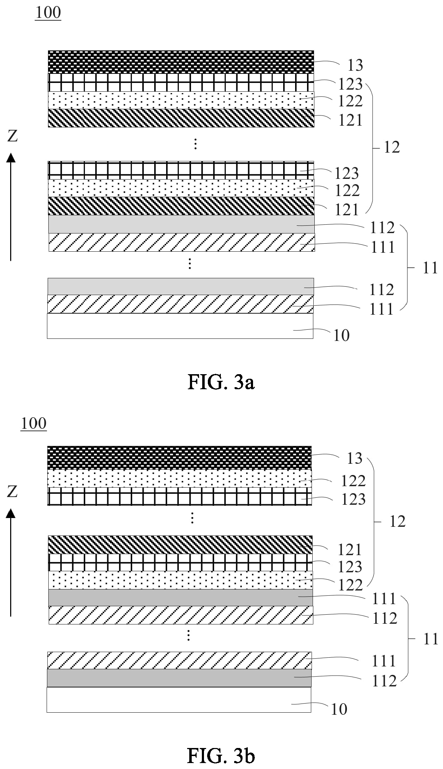

FIG. 3a and FIG. 3b are diagrams of two example structures of a glass structural component according to an embodiment of this application. As shown in FIG. 3a and FIG. 3b, the glass structural component 100 includes a glass substrate 10, and a first optical scratch-resistant stacked layer 11, a second optical scratch-resistant stacked layer 12, and a first superhard layer 13 that are sequentially stacked on a side of the glass substrate 10. Specifically, the first optical scratch-resistant stacked layer 11 is disposed on one side of the glass substrate 10, the second optical scratch-resistant stacked layer 12 is disposed on a side that is of the first optical scratch-resistant stacked layer 11 and that faces away from the glass substrate 10, and the first superhard layer 13 is disposed on a side that is of the second optical scratch-resistant stacked layer 12 and that faces away from the first optical scratch-resistant stacked layer 11.

The first optical scratch-resistant stacked layer 11 includes at least one first refractive index material layer 111 and at least one second refractive index material layer 112 that are alternately stacked. Refractive indexes of the first refractive index material layer 111 and the second refractive index material layer 112 are different. For example, the refractive index of the first refractive index material layer 111 is greater than the refractive index of the second refractive index material layer 112.

The second optical scratch-resistant stacked layer 12 includes at least one third refractive index material layer 121, at least one fourth refractive index material layer 122, and at least one fifth refractive index material layer 123 that are stacked. Refractive indexes of the three types of material layers are different. For example, the refractive indexes of the third refractive index material layer 121, the fourth refractive index material layer 122, and the fifth refractive index material layer 123 are in descending order.

The first superhard layer 13 is diamond-like carbon including a doping element, and the doping element includes at least one of: silicon (Si), aluminum (Al), titanium (Ti), zirconium (Zr), molybdenum (Mo), tungsten (W), and nitrogen (N).

In this application, the first optical scratch-resistant stacked layer 11 formed by alternately stacking the two types of material layers with different refractive indexes, the second optical scratch-resistant stacked layer 12 formed by stacking the three types of material layers with different refractive indexes, and the first superhard layer 13 formed by the diamond-like carbon including a specific doping element are sequentially stacked on the glass substrate 10. First, the diamond-like carbon includes at least one of doping elements Si, Al, Ti, Zr, Mo, and N, and doping modification may be performed on the diamond-like carbon. This helps increase a hardness of the diamond-like carbon, improve wear resistance of the glass structural component 100, and improve a capability of scratch resistance against daily necessities (for example, a key). In addition, compared with an undoped diamond-like carbon layer, a diamond-like carbon layer doped with the foregoing element has a higher optical transmittance at a same thickness, that is, the foregoing doping element reduces damage to optical performance. Second, the first optical scratch-resistant stacked layer 11 and the second optical scratch-resistant stacked layer 12 are disposed between the glass substrate 10 and such a first superhard layer 13. The two optical stacked layers may be made to be thick and maintain good optical transmissivity, and both have good wear-resistant and scratch-proof performance. Through cooperation of the two optical stacked layers and the first superhard layer 13, a nano-indentation hardness of the glass structural component 100 can be increased, durable scratch resistance of the glass structural component 100 against a high-hardness object (for example, sand particles/dusts with Mohs hardnesses of 7 or higher) is enhanced. Even if the first superhard layer 13 becomes thin after the glass structural component 100 is used for a long time, existence of the first optical scratch-resistant stacked layer 11 and the second optical scratch-resistant stacked layer 12 can still ensure good scratch resistance of the glass structural component 100. Therefore, the glass structural component 100 can have a high hardness and good scratch resistance performance and scratch resistance, and optical performance such as a transmittance and an appearance color of the glass structural component 100 does not significantly change compared with that of the glass substrate 10.

It should be noted that FIG. 3a and FIG. 3b are example figures of this application, and do not represent an actual size of a product. In addition, a thickness of each film layer, a thickness proportion relationship between film layers, and the like in the figure are not intended to limit an actual product of this application. The same explanation shall apply to other accompanying drawings in this application. In addition, FIG. 3a and FIG. 3b each show only one film layer arrangement form of the first optical scratch-resistant stacked layer 11 and one film layer arrangement form of the second optical scratch-resistant stacked layer 12. However, this does not mean that actual film layer arrangement forms of the first optical scratch-resistant stacked layer 11 and the second optical scratch-resistant stacked layer 12 are limited to those shown in FIG. 3a and FIG. 3b in this application.

Specifically, if the first refractive index material layer 111 is denoted as a layer A, and the second refractive index material layer 112 is denoted as a layer C, in the first optical scratch-resistant stacked layer 11, a total quantity of layers A and a total quantity of layers B may be equal or unequal. For example, in a direction from the glass substrate 10 to the first optical scratch-resistant stacked layer 11 (namely, a direction Z shown by the arrow in FIG. 3a or FIG. 3b), a film layer arrangement form of the first optical scratch-resistant stacked layer 11 may be (A-C)ₙ (as shown in FIG. 3a), (A-C)ₙ-A, (C-A)ₙ (as shown in FIG. 3b), or (C-A)ₙ-C, where n is an integer greater than or equal to 1. Thicknesses of layers A may be the same or different. Thicknesses of layers C may be the same or different. "-" indicates a stacking relationship. For example, (A-C)ₙ indicates that layers A, C, ..., A, and C are sequentially stacked in the Z direction, and a total quantity of cycles of stacking the layer A and the layer C is n. The first optical scratch-resistant stacked layer 11 with good optical transmissivity and good scratch resistance can be obtained by alternately stacking the two types of material layers with different refractive indexes, and the first optical scratch-resistant stacked layer 11 has better optical transmissivity.

In the second optical scratch-resistant stacked layer 12, an arrangement form of the third refractive index material layer 121, the fourth refractive index material layer 122, and the fifth refractive index material layer 123 is not limited, provided that two film layers in contact are material layers with different refractive indexes. If the third refractive index material layer 121 is denoted as a layer D, the fourth refractive index material layer 122 is denoted as a layer E, and the fifth refractive index material layer 123 is denoted as a layer F, there is a layer E or a layer F between adjacent layers D, there is a layer D or a layer F between adjacent layers E, and there is a layer D or a layer E between adjacent layers F. For example, in the Z direction, a film layer arrangement form of the second optical scratch-resistant stacked layer 12 may include but is not limited to (D-E-F)ₙ (as shown in FIG. 3a), (D-E-F)ₙ-A, (D-E-F)ₙ-D-E, (F-E-D)ₙ, (F-E-D)ₙ-F, (F-E-D)ₙ-F-E, (E-F-D)ₙ-F-E, (D-E)ₘ-(D-E-F)ₙ, or the like, where each of m and n are an integer greater than or equal to 1. Similar to the preceding paragraph, "-" indicates a stacking relationship in the Z direction. The second optical scratch-resistant stacked layer 12 with good optical transmissivity and good scratch resistance can be obtained by stacking the three types of materials with different refractive indexes, and the second optical scratch-resistant stacked layer 12 has better scratch resistance.

In this application, a transmittance, to visible light, of a stacked structure including the first optical scratch-resistant stacked layer 11 and the second optical scratch-resistant stacked layer 12 is greater than or equal to 90%. The stacked structure has high optical transparency (for example, a visible light average transmittance is 90% or higher). Disposing the stacked structure between the glass substrate 10 and the first superhard layer 13 does not affect visible light transmissivity of the entire glass structural component 100. The first optical scratch-resistant stacked layer 11 is an optical transparent layer, and the second optical scratch-resistant stacked layer 12 is an optical transparent layer.

In an implementation of this application, in the first optical scratch-resistant stacked layer 11, the refractive index of the first refractive index material layer 111 (the foregoing layer A) is greater than or equal to 1.80, and the refractive index of the second refractive index material layer 112 (the foregoing layer C) is less than or equal to 1.60. The first optical scratch-resistant stacked layer 11 with good optical transmissivity and good scratch resistance can be obtained by alternately stacking the two types of material layers with different refractive indexes respectively in these ranges, and the first optical scratch-resistant stacked layer 11 has better optical transmissivity. In some implementations of this application, the refractive index of the layer A is greater than or equal to 1.80 and the refractive index of the layer C is less than 1.60; or the refractive index of the layer A is greater than 1.80 and the refractive index of the layer C is less than or equal to 1.60; or the refractive index of the layer A is greater than 1.80 and the refractive index of the layer C is less than 1.60. In some embodiments, the refractive index of the layer A is greater than or equal to 1.85, and the refractive index of the layer C is less than or equal to 1.55.

The first refractive index material layer 111 may include one of: a silicon nitride layer (namely, a Si₃N₄ layer), an aluminum nitride layer (namely, an AlN layer), a silicon aluminum nitride (Si_{w}Al_{z}Nₓ) layer, a silicon oxynitride (Si_{w}O_{y}Nₓ) layer, an aluminum oxynitride (Al_{z}O_{y}Nₓ) layer, and a silicon aluminum oxynitride (Si_{w}Al_{z}O_{y}Nₓ) layer. The second refractive index material layer 112 may include one of: a silicon oxide layer (for example, a SiO₂ layer), an aluminum oxide layer (namely, an Al₂O₃ layer), a silicon aluminum oxide (Si_{w}Al_{z}O_{y}) layer, a silicon oxynitride (Si_{w}O_{y}Nₓ) layer, an aluminum oxynitride (Al_{z}O_{y}Nₓ) layer, and a silicon aluminum oxynitride (Si_{w}Al_{z}O_{y}Nₓ) layer.

It should be noted that the subscripts of the elements in the foregoing chemical formulas should ensure that the corresponding chemical formulas meet charge balance. In addition, x in the foregoing chemical formulas does not have an association relationship, y in the chemical formulas does not have an association relationship, z in the chemical formulas does not have an association relationship, and w in the chemical formulas does not have an association relationship. Same letters (such as z or w) in different chemical formulas do not have an association relationship, and are not distinguished for ease of description.

Although silicon oxynitride, aluminum oxynitride, and silicon aluminum oxynitride are mentioned in both material selection ranges of the first refractive index material layer 111 and the second refractive index material layer 112, because the refractive indexes of the two material layers are in different ranges, even if the two material layers are both silicon oxynitride (as an example), a chemical formula of silicon oxynitride in the first refractive index material layer 111 is different from a chemical formula of silicon oxynitride in the second refractive index material layer 112.

In some implementations of this application, the first refractive index material layer 111 is selected from one of: a silicon nitride layer, an aluminum nitride layer, and a silicon aluminum nitride layer. The second refractive index material layer 112 is selected from one of: a silicon oxide layer, an aluminum oxide layer, and a silicon aluminum oxide layer. In an embodiment, the first refractive index material layer 111 is a silicon aluminum nitride layer, and the second refractive index material layer 112 is a silicon aluminum oxide layer. In this case, when the foregoing refractive index requirement of this application is met, an inter-layer bonding force between the first refractive index material layer 111 and the second refractive index material layer 112 is high.

In an implementation of this application, the refractive index of the third refractive index material layer 121 (the foregoing layer D) is greater than 1.80, the refractive index of the fourth refractive index material layer 122 (the foregoing layer E) ranges from 1.60 to 1.80 (that is, greater than or equal to 1.60 to less than or equal to 1.80), and the refractive index of the fifth refractive index material layer 123 (the foregoing layer F) is less than 1.60. The second optical scratch-resistant stacked layer 12 with good optical transmissivity and good scratch resistance can be obtained by stacking the three types of material layers with different refractive indexes respectively in these ranges, and the second optical scratch-resistant stacked layer 12 has better scratch resistance. In some implementations of this application, the refractive index of the layer D is greater than or equal to 1.85, the refractive index of the layer F is less than or equal to 1.55, and the refractive index of the layer E is in a range of 1.60 to 1.80.

It should be noted that, due to impact of a test method, refractive indexes of the layers A, C, D, E, and F in this application may have an appropriate error in a specific range. The foregoing data in the appropriate error range shall also be considered to fall within the protection scope of this application. Similar explanation shall apply to other parameter ranges mentioned below in this application.

The third refractive index material layer 121 may include one of: a silicon nitride layer (namely, a Si₃N₄ layer), an aluminum nitride layer (namely, an AlN layer), a silicon aluminum nitride layer (Si_{w}Al_{z}Nₓ), and a titanium oxide layer (for example, a TiO₂ layer). These materials have a high hardness and good scratch resistance. The fourth refractive index material layer 122 includes one of: a silicon oxynitride (Si_{w}O_{y}Nₓ) layer, an aluminum oxynitride (Al_{z}O_{y}Nₓ) layer, and a silicon aluminum oxynitride (Si_{w}Al_{z}O_{y}Nₓ) layer. The fifth refractive index material layer 123 includes one of: a silicon oxide layer (for example, a SiO₂ layer), an aluminum oxide layer (namely, an Al₂O₃ layer), and a silicon aluminum oxide (Si_{w}Al_{z}O_{y}) layer.

Similarly, although a material selection range of the fourth refractive index material layer 122 mentions silicon oxynitride, aluminum oxynitride, and silicon aluminum oxynitride that are the same as those of the first refractive index material layer 111 and the second refractive index material layer 112, because the refractive indexes of the three film layers are in different ranges, even if the three film layers are made of a same material (for example, silicon oxynitride), chemical formulas of silicon oxynitride in the three film layers are different.

In this application, the layers A, C, D, E, and F each may be independently coated in a manner of chemical vapor deposition, physical vapor deposition, or the like. The chemical vapor deposition includes but is not limited to hot filament chemical vapor deposition, plasma enhanced chemical vapor deposition, or the like. The physical vapor deposition includes but is not limited to magnetron sputtering, vacuum evaporation, and ion coating (for example, arc ion coating and radio frequency ion coating).

For example, when the silicon oxynitride layer is formed by using a magnetron sputtering process, a used target material may be a Si target, and inert gas (for example, argon), nitrogen (N₂), and oxygen (O₂) are injected, to form the silicon oxynitride layer through deposition. Traffic of N₂ and O₂ may be adjusted and controlled, so that a molar ratio of N to O in the obtained Si_{w}O_{y}Nₓ is adjusted and controlled. When the silicon aluminum nitride layer is formed by using a magnetron sputtering process, a used target material includes a Si target and an Al target, and argon and N₂ are injected, to form the silicon aluminum nitride layer through deposition. Sputtering power, time, and the like of the Si target and the Al target may be adjusted and controlled, so that a molar ratio of Si to Al in Si_{w}Al_{z}Nₓ is adjusted and controlled. When the silicon aluminum oxynitride layer is formed by using a magnetron sputtering process, a used target material includes a Si target and an Al target, and argon, N₂, and O₂ are injected, to deposit a target coating.

In some implementations of this application, when a surface layer that is of the first optical scratch-resistant stacked layer 11 and that is close to the second optical scratch-resistant stacked layer 12 is the second refractive index material layer 112 (as shown in FIG. 3a), the second refractive index material layer 112 is in contact with the third refractive index material layer 121 or the fourth refractive index material layer 122 in the second optical scratch-resistant stacked layer 12. In this way, the stacked structure of the first optical scratch-resistant stacked layer 11 and the second optical scratch-resistant stacked layer 12 has high optical transmissivity. In this case, a film layer arrangement manner of the first optical scratch-resistant stacked layer 11 in the Z direction may be (A-C)ₙ (as shown in FIG. 3a) or (C-A)ₙ-C. FIG. 3a is an example in which the second refractive index material layer 112 is in contact with the third refractive index material layer 121.

In some other implementations of this application, when a surface layer that is of the first optical scratch-resistant stacked layer 11 and that is close to the second optical scratch-resistant stacked layer 12 is the first refractive index material layer 111 (as shown in FIG. 3b), the first refractive index material layer 111 is in contact with the fourth refractive index material layer 122 or the fifth refractive index material layer 123 in the second optical scratch-resistant stacked layer 12. In this way, the stacked structure of the first optical scratch-resistant stacked layer 11 and the second optical scratch-resistant stacked layer 12 has high optical transmissivity. In this case, a film layer arrangement manner of the first optical scratch-resistant stacked layer 11 in the Z direction may be (C-A)ₙ (as shown in FIG. 3b) or (A-C)ₙ-A. FIG. 3b is an example in which the first refractive index material layer 111 is in contact with the fourth refractive index material layer 122.

In this application, a quantity of film layers included in the first optical scratch-resistant stacked layer 11 is greater than or equal to 2, and is further greater than or equal to 3. When the quantity of film layers of the first optical scratch-resistant stacked layer 11 is greater than or equal to 3, a quantity of first refractive index material layers 111 and/or a quantity of second refractive index material layers 112 are/is greater than or equal to 2. A quantity of film layers included in the second optical scratch-resistant stacked layer 12 is greater than or equal to 3, and is further greater than or equal to 4.

In an implementation of this application, a total quantity of film layers included in the first optical scratch-resistant stacked layer 11 and the second optical scratch-resistant stacked layer 12 is greater than or equal to 5, and may further be in a range of 8 to 30, for example, specifically 10, 12, 15, 20, 25, or 28. In this way, the stacked structure of the first optical scratch-resistant stacked layer 11 and the second optical scratch-resistant stacked layer 12 may be given good optical transmissivity and scratch resistance by stacking an appropriate quantity of material layers with different refractive indexes, and it is ensured that the first optical scratch-resistant stacked layer 11 and the second optical scratch-resistant stacked layer 12 are securely combined with the glass substrate 10.

In this application, thicknesses of the first refractive index material layer 111 (the layer A), the second refractive index material layer 112 (the layer C), the third refractive index material layer 121 (the layer D), the fourth refractive index material layer 122 (the layer E), and the fifth refractive index material layer 123 (the layer F) are not specially limited. In a common implementation of this application, the thicknesses of the layers A, C, D, E, and F each may be independently in a range of 1 nm to 2500 nm, and may further be in a range of 5 nm to 2000 nm.

In this application, each of thicknesses of the first optical scratch-resistant stacked layer 11 and the second optical scratch-resistant stacked layer 12 are greater than a thickness of the first superhard layer 13. Disposing the first optical scratch-resistant stacked layer 11 and the second optical scratch-resistant stacked layer 12 under the first superhard layer 13 can help the entire glass structural component 100 in achieving long-term scratch resistance against a high-hardness object.

In a possible implementation of this application, a sum of the thicknesses of the first optical scratch-resistant stacked layer 11 and the second optical scratch-resistant stacked layer 12 may fall in a range of 500 nm to 3000 nm. In this case, the stacked structure including the first optical scratch-resistant stacked layer 11 and the second optical scratch-resistant stacked layer 12 can be securely bonded to the glass substrate 10, and is sufficient to improve durable wear resistance and durable scratch resistance of the entire glass structural component 100. For example, the sum of the thicknesses may be specifically 600 nm, 800 nm, 1000 nm, 1200 nm, 1500 nm, 1800 nm, 2000 nm, 2200 nm, 2400 nm, or the like. In some implementations, the sum of the thicknesses of the first optical scratch-resistant stacked layer 11 and the second optical scratch-resistant stacked layer 12 is 1000 nm to 2500 nm.

In this application, in the first superhard layer 13, the doping element in the diamond-like carbon includes one or more of silicon (Si), aluminum (Al), titanium (Ti), zirconium (Zr), molybdenum (Mo), tungsten (W), and nitrogen (N). For example, the doping element in the diamond-like carbon includes N; or includes Si; or includes Al; or includes Ti; or includes Zr; or includes Mo; or includes W; or includes Si and Ti; or includes Ti and Al; or includes Mo and W; or includes Si and N. A Mohs hardness of the diamond-like carbon doped with these elements can be 8 or higher, and the diamond-like carbon has good optical performance and can be easy to manufacture.

In some implementations of this application, in the first superhard layer 13, the doping element in the diamond-like carbon may further include a hydrogen (H) element. The doping element H can also help to improve the hardness of the diamond-like carbon.

In some embodiments of this application, the first superhard layer 13 is one of: a diamond-like carbon layer doped with Si, a diamond-like carbon layer doped with Al, a diamond-like carbon layer doped with Ti, a diamond-like carbon layer doped with Zr, a diamond-like carbon layer doped with Mo, a diamond-like carbon layer doped with W, and a diamond-like carbon layer doped with N. These doped diamond-like carbon layers are easy to manufacture and can better balance a high hardness and good optical transmissivity.

In a possible implementation of this application, in the first superhard layer 13, a doping concentration of the doping element is less than or equal to 20 wt%. In this way, it can be ensured that introduction of the doping element does not damage structural stability of the diamond-like carbon, and a high hardness and good optical transmissivity of the doped diamond-like carbon layer are ensured. It should be noted that the concentration of the doping element mentioned herein is specifically a sum of doping concentrations of all doping elements in the first superhard layer 13. In this application, the diamond-like carbon including the doping element may be coated in a manner of physical vapor deposition (for example, magnetron sputtering), chemical vapor deposition (for example, plasma enhanced chemical vapor deposition), or the like.

In an implementation of this application, the thickness of the first superhard layer 13 is in a range of 1 nm to 100 nm. The thickness of the first superhard layer 13 is 100 nm or lower, so that it can be ensured that the first superhard layer 13 is a film layer with high transparency while a hardness of a surface on a side of the glass structural component 100 is increased, and it can be ensured that the entire glass structural component 100 has little change in optical transmissivity, appearance effect, and the like compared with a pure glass substrate 10. Specifically, the thickness of the first superhard layer 13 may be 2 nm, 3 nm, 5 nm, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, or the like. In some implementations, the thickness of the first superhard layer 13 is in a range of 3 nm to 50 nm, and may further be in a range of 2 nm to 30 nm. In this case, a surface layer of the glass structural component 100 with the first superhard layer 13 has a high hardness and long-term scratch resistance, and the first superhard layer 13 can have high optical transmissivity.

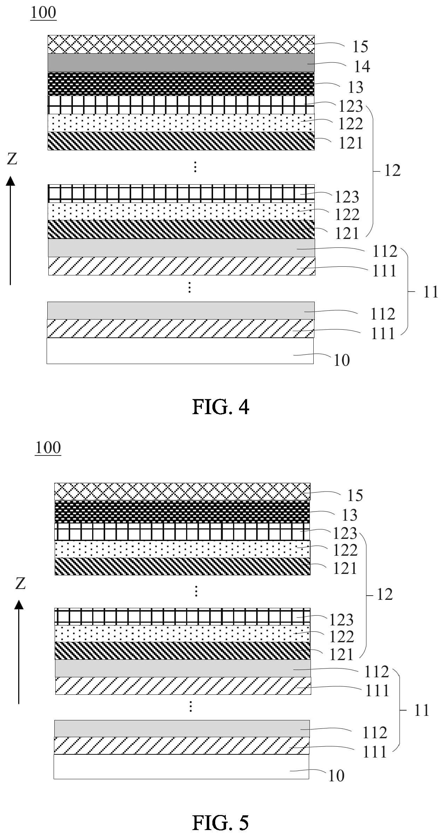

FIG. 4 is a diagram of still another structure of a glass structural component according to some implementations of this application. Compared with FIG. 3a, FIG. 4 additionally has the following second superhard layer 14 and the following anti-fingerprint layer 15.

As shown in FIG. 4, the second superhard layer 14 is disposed on a side that is of a first superhard layer 13 and that faces away from a second optical scratch-resistant stacked layer 12. A material of the second superhard layer 14 is different from a material of the first superhard layer 13. The second superhard layer 14 may help the first superhard layer 13 have a long-term high hardness, and through cooperation of the second superhard layer 14 and the first superhard layer 13, durable scratch resistance of a surface layer of the glass structural component 100 against a high-hardness object is improved. The second superhard layer 14 may include one of silicon nitride (Si₃N₄), silicon carbide (SiC), silicon carbonitride (SiNₓ₂C_{y2}), and CNₓ₁, where x1, x2, and y2 are all in a range of (0, 4].

In an implementation of this application, a thickness of the second superhard layer 14 is in a range of 1 nm to 50 nm. An optical transmittance of the second superhard layer 14 with an appropriately low thickness does not affect appearance effect of the entire glass structural component 100. Specifically, the thickness of the second superhard layer 14 may be 2 nm, 5 nm, 10 nm, 15 nm, 20 nm, 25 nm, 30 nm, 35 nm, 40 nm, 45 nm, or the like. In some implementations, the thickness of the second superhard layer 14 is in a range of 2 nm to 20 nm.

In some implementations, as shown in FIG. 4, the glass structural component 100 further includes the anti-fingerprint layer (Anti-fingerprint film, AF layer for short) 15, and the anti-fingerprint layer 15 is located on a side that is of the second superhard layer 14 and that faces away from the first superhard layer 13. The anti-fingerprint layer 15 is mainly configured to: when a finger of a user touches the glass structural component 100, reduce a fingerprint formed on the glass structural component 100, so that appearance effect of the glass structural component 100 is not affected. In addition, the second superhard layer 14 is disposed between the anti-fingerprint layer 15 and the first superhard layer 13, so that degradation impact of a bottom layer of the anti-fingerprint layer 15 on a hardness of the first superhard layer 13 in a long-term use process can be reduced.

Usually, a material of the AF layer 15 includes a fluoride-containing compound and/or a silicon-containing compound. The two types of compounds have hydrophobic and oil-phobic performance, so that a surface of the glass structural component 100 is easy to clean, and a fingerprint residue resistance capability is good. In some implementations, a thickness of the anti-fingerprint layer 15 may be in a range of 5 nm to 50 nm. The anti-fingerprint layer 15 with an appropriate thickness helps the glass structural component 100 have good fingerprint resistance durability and wear resistance, and also does not obviously affect optical transmissivity of the glass structural component 100.

FIG. 5 is a diagram of yet another structure of a glass structural component according to some other implementations of this application. Compared with FIG. 3a, FIG. 5 additionally has the following anti-fingerprint layer 15.

In some implementations of this application, as shown in FIG. 5, the glass structural component 100 further includes the anti-fingerprint layer 15, and the anti-fingerprint layer 15 is located on a side that is of a first superhard layer 13 and that faces away from a second optical scratch-resistant stacked layer 12. For a function, a thickness, a material, and the like of the anti-fingerprint layer 15, refer to the foregoing descriptions of this application. Details are not described herein again.

It should be noted that features in implementations of this application may be combined with each other when there is no conflict, and any combination of features in different implementations also falls within the protection scope of this application. In other words, the plurality of implementations described above may be further combined according to an actual requirement. For example, in the glass structural component 100 shown in FIG. 3b, an AF layer 15 may also be disposed on a side that is of the first superhard layer 13 and that faces away from the second optical scratch-resistant stacked layer 12. Further, a second superhard layer 14 may be disposed between the AF layer 15 and the first superhard layer 13. In addition, the glass structural component 100 in this embodiment of this application may further be flexibly disposed with another film layer structure according to an actual requirement.

In an implementation of this application, a Mohs hardness of a surface on a side that is of each glass structural component 100 and that is away from the glass substrate 10 is greater than or equal to 7. The term "Mohs hardness" is also referred to as a scratch hardness, and is a hardness measured by using a scratch method to scratch, by using a mineral with a known hardness, a surface that is of the glass structural component 100 and that faces away from the glass substrate 10. The Mohs hardness is not an absolute hardness value, but a relative hardness expressed in an order of hardness.

A Mohs hardness of a surface on a side that is of the glass structural component 100 and that is away from the glass substrate 10 is greater than or equal to 7. When the surface is scratched by an object whose hardness does not exceed 7, the first superhard layer 13 with a large hardness mainly resists an external scratching force, and basically no scratch is generated on the surface of the glass structural component 100. When the surface is scratched by an object whose hardness is greater than 7, through cooperation of the first superhard layer 13 with the second optical scratch-resistant stacked layer 12 and a first optical scratch-resistant stacked layer 11 that are thick below the first superhard layer 13, scratches caused by the high-hardness object can be better resisted.

It should be noted that, when the Mohs hardness is tested, an exposed surface that is of the glass structural component 100 and that faces away from the glass substrate 10 (namely, a surface of a layer that is farthest from the glass substrate 10) is scratched by using a mineral with a known hardness. For example, for scratching glass structural components 100 shown in FIG. 3a and FIG. 3b, the first superhard layer 13 of the glass structural component 100 is specifically scratched; and for scratching glass structural components 100 shown in FIG. 4 and FIG. 5, the anti-fingerprint layer 15 of the glass structural component 100 is specifically scratched.

In an implementation of this application, a nano-indentation hardness of the side that is of each glass structural component 100 and that is away from the glass substrate 10 is 14 GPa or higher at an indentation depth greater than 150 nm. The glass structural component 100 has a high nano-indentation hardness. This reflects that the glass structural component 100 can better resist a deep scratch, a durable scratch, or the like caused by a high-hardness object. A method for testing the nano-indentation hardness includes: pressing a diamond indenter on the exposed surface that is of the side that is of the glass structural component 100 and that is away from the glass substrate 10, gradually pressing the indenter under increasing external load until a predetermined indentation depth is reached, and then calculating the indentation hardness by measuring the indentation depth and corresponding external load at this moment. It should be noted that, in a test process, in an initial stage, as the external load increases, an indentation depth gradually increases; and in a later stage, the external load increases and the indentation depth basically remains unchanged.

In an implementation of this application, an average transmittance of each glass structural component 100 in a visible light region (a wavelength is specifically 400 nm to 700 nm) is 88% or higher. After a film layer structure that includes at least the first optical scratch-resistant stacked layer 11, the second optical scratch-resistant stacked layer 12, and the first superhard layer 13 is disposed on a side of the glass substrate 10, an obtained glass structural component 100 may still have a high visible light transmittance, and is particularly suitable for a display cover plate 101, a camera protection cover plate 103, and the like that have a high transparency requirement.

In an implementation of this application, a color coordinate offset value △E of each glass structural component 100 relative to the glass substrate 10 is less than 1.5. The color coordinate offset value △E may reflect a color change degree of each glass structural component 100 relative to the glass substrate 10. ΔE=[(ΔL)²+(Δa)²+(Δb)²]^{1/2}, where ΔL indicates a difference between values L of the glass structural component 100 and the glass substrate 10 in Lab chroma coordinates, Δa indicates a difference between values a of the glass structural component 100 and the glass substrate 10 in the Lab chroma coordinates, and Δb indicates a difference between values b of the glass structural component 100 and the glass substrate 10 in the Lab chroma coordinates. A larger value of ΔE indicates a larger color difference of the glass structural component 100 relative to the glass substrate 10. A smaller value of ΔE indicates that after the film layer structure that includes at least the first optical scratch-resistant stacked layer 11, the second optical scratch-resistant stacked layer 12, and the first superhard layer 13 is disposed on the side of the glass substrate 10, the obtained glass structural component 100 still has low colorability, and appearance effect is basically not affected.

According to the glass structural component 100 provided in this embodiment of this application, a film layer structure including the first optical scratch-resistant stacked layer 11, the second optical scratch-resistant stacked layer 12, and the first superhard layer 13 is sequentially disposed on a surface on a side of the glass substrate, so that the glass structural component has a high hardness, good wear resistance performance, and scratch resistance performance, and little change in optical performance compared with a pure glass substrate 10. Therefore, the glass component can better meet various use requirements and use experience of an electronic device, and has high quality reliability. In addition, compared with a glass substrate on which only an undoped diamond-like carbon layer (a thickness is the same as that of the first superhard layer 13 in this application) is disposed on a surface, the glass structural component 100 in this embodiment of this application has a higher nano-indentation hardness at a same indentation depth greater than 150 nm, and has better durability of resisting a deep scratch. In addition, when the glass structural component 100 in this embodiment of this application includes the second superhard layer 14, the nano-indentation hardness of the glass structural component 100 may be greater, and scratch resistance durability of the glass structural component 100 is higher.

An embodiment of this application further provides an electronic device that uses the glass structural component. As described above in this application, in the electronic device 1000, at least one of the following may use the glass structural component 100 provided in this embodiment of this application: a display cover plate 101, a rear cover 102, and a camera protection cover plate 103.

For example, when the display cover plate 101 uses the glass structural component 100, a glass substrate 10 of the glass structural component 100 is close to a display. A user touches a surface on a side that is of the glass structural component 100 and that is away from the glass substrate 10. The display cover plate 101 covers the display, so that scratches and wear of the display can be reduced in a use process of the electronic device, and display effect is not affected.

For example, when the camera protection cover plate 103 uses the glass structural component 100, the glass substrate 10 of the glass structural component 100 is close to a camera assembly 2, and a first superhard layer 13 is away from the camera assembly 2. The camera protection cover plate 103 covers the camera assembly 2, so that scratches and wear of a camera of the camera assembly 2 can be reduced in the use process of the electronic device, and image shooting effect is not affected.

The foregoing descriptions are merely example implementations of this application, and descriptions thereof are specific and detailed, but cannot be understood as a limitation on the patent scope of this application. It should be noted that a person of ordinary skill in the art may make some variants and improvements without departing from the concept of this application and the variants and improvements shall fall within the protection scope of this application. Therefore, the protection scope of the patent in this application shall be subject to the following claims.

It should be noted that all the foregoing accompanying drawings are example figures of this application, and do not represent an actual size of a product. In addition, a size proportion relationship between the components in the accompanying drawings is not intended to limit an actual product in this application.

The terms "first", "second", "third", and "fourth" are merely intended for a purpose of description, and shall not be understood as an indication or implication of relative importance or implicit indication of a quantity of indicated technical features. Therefore, a feature defined by "first", "second", "third", or "fourth" may explicitly or implicitly include one or more features.

In the descriptions of this application, unless otherwise specified, "a plurality of (types)" means greater than or equal to two (types). "At least one (type)" means one (type) or more (types). "At least one of the following items (pieces)" or a similar expression thereof means any combination of these items, including a single item (piece) or any combination of a plurality of items (pieces). For example, "at least one item (piece) of a, b, or c" or "at least one item (piece) of a, b, and c" may indicate: a, b, c, a-b (namely, a and b), a-c, b-c, or a-b-c, where a, b, and c may be singular or plural.

In this application, the term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects.

In addition, a value range indicated by "-" in this application is a range including values recorded before and after "-" as a minimum value and a maximum value respectively. Expressions of a parameter range in this application, for example, "greater than or equal to (≥)", "less than or equal to (≤)", "above...", and "below...", all include a specified number. Values and value ranges in embodiments of this application are approximate values, and may have an error in a specific range due to impact of a manufacturing process/test method or the like. When the values and value ranges fall in an appropriate error range of measurement, it is also considered that the values and value ranges fall within the protection scope of this application.

## Claims

1. A glass structural component (100), comprising:
a glass substrate (10);
a first optical scratch-resistant stacked layer (11), disposed on a side of the glass substrate (10), wherein the first optical scratch-resistant stacked layer (11) comprises at least one first refractive index material layer (111) and at least one second refractive index material layer (112) that are alternately stacked, and a refractive index of the first refractive index material layer (111) is greater than a refractive index of the second refractive index material layer (112);
a second optical scratch-resistant stacked layer (12), disposed on a side that is of the first optical scratch-resistant stacked layer (11) and that faces away from the glass substrate (10), wherein the second optical scratch-resistant stacked layer (12) comprises at least one third refractive index material layer (121), at least one fourth refractive index material layer (122), and at least one fifth refractive index material layer (123) that are stacked, and refractive indexes of the third refractive index material layer (121), the fourth refractive index material layer (122), and the fifth refractive index material layer (123) are in descending order; and
a first superhard layer (13), disposed on a side that is of the second optical scratch-resistant stacked layer (12) and that faces away from the first optical scratch-resistant stacked layer (11), wherein the first superhard layer (13) is diamond-like carbon comprising a doping element, and the doping element comprises at least one of: silicon, aluminum, titanium, zirconium, molybdenum, tungsten, and nitrogen.

2. The glass structural component according to claim 1, wherein the refractive index of the first refractive index material layer (111) is greater than or equal to 1.8, and the refractive index of the second refractive index material layer (112) is less than or equal to 1.60; and
the refractive index of the third refractive index material layer (121) is greater than 1.80, the refractive index of the fourth refractive index material layer (122) ranges from 1.60 to 1.80, and the refractive index of the fifth refractive index material layer (123) is less than 1.60.

3. The glass structural component according to claim 2, wherein the first refractive index material layer (111) comprises one of: a silicon nitride layer, an aluminum nitride layer, a silicon aluminum nitride layer, a silicon oxynitride layer, an aluminum oxynitride layer, and a silicon aluminum oxynitride layer; and
the second refractive index material layer (112) comprises one of: a silicon oxide layer, an aluminum oxide layer, a silicon aluminum oxide layer, a silicon oxynitride layer, an aluminum oxynitride layer, and a silicon aluminum oxynitride layer.

4. The glass structural component according to claim 2, wherein the third refractive index material layer (121) comprises one of: a silicon nitride layer, an aluminum nitride layer, a silicon aluminum nitride layer, and a titanium oxide layer;
the fourth refractive index material layer (122) comprises one of: a silicon oxynitride layer, an aluminum oxynitride layer, and a silicon aluminum oxynitride layer; and
the fifth refractive index material layer (123) comprises one of: a silicon oxide layer, an aluminum oxide layer, and a silicon aluminum oxide layer.

5. The glass structural component according to any one of claims 1 to 4, wherein a surface layer that is of the first optical scratch-resistant stacked layer (11) and that is close to the second optical scratch-resistant stacked layer (12) is the first refractive index material layer (111), and the first refractive index material layer (111) is in contact with the fourth refractive index material layer (122) or the fifth refractive index material layer (123); or
a surface layer that is of the first optical scratch-resistant stacked layer (11) and that is close to the second optical scratch-resistant stacked layer (12) is the second refractive index material layer (112), and the second refractive index material layer (112) is in contact with the third refractive index material layer (121) or the fourth refractive index material layer (122).

6. The glass structural component according to any one of claims 1 to 5, wherein each of thicknesses of the first refractive index material layer (111), the third refractive index material layer (121), the fourth refractive index material layer (122), and the fifth refractive index material layer (123) are in a range of 1 nm to 2500 nm.

7. The glass structural component according to any one of claims 1 to 6, wherein a sum of thicknesses of the first optical scratch-resistant stacked layer (11) and the second optical scratch-resistant stacked layer (12) is in a range of 500 nm to 3000 nm.

8. The glass structural component according to any one of claims 1 to 7, wherein a thickness of the first superhard layer (13) is in a range of 1 nm to 100 nm.

9. The glass structural component according to any one of claims 1 to 8, wherein in the first superhard layer (13), a doping concentration of the doping element is less than or equal to 20 wt%.

10. The glass structural component according to any one of claims 1 to 9, wherein a second superhard layer (14) is further disposed on a side that is of the first superhard layer (13) and that faces away from the second optical scratch-resistant stacked layer (12), and the second superhard layer (14) and the first superhard layer (13) are made of different materials.

11. The glass structural component according to claim 10, wherein the second superhard layer (14) comprises one of silicon nitride, silicon carbide, silicon carbonitride, and CNₓ₁, and x1 is in a range of (0, 4].

12. The glass structural component according to claim 10 or 11, wherein a thickness of the second superhard layer (14) is in a range of 1 nm to 50 nm.

13. The glass structural component according to any one of claims 10 to 12, wherein the glass structural component (100) further comprises an anti-fingerprint layer (15), and the anti-fingerprint layer (15) is located on a side that is of the second superhard layer (14) and that faces away from the first superhard layer (13).

14. The glass structural component according to any one of claims 1 to 9, wherein the glass structural component (100) further comprises an anti-fingerprint layer (15), and the anti-fingerprint layer (15) is located on a side that is of the first superhard layer (13) and that faces away from the second optical scratch-resistant stacked layer (12).

15. The glass structural component according to any one of claims 1 to 14, wherein a Mohs hardness of a surface on a side that is of the glass structural component (100) and that is away from the glass substrate (10) is greater than or equal to 7.

16. The glass structural component according to any one of claims 1 to 15, wherein a nano-indentation hardness of the side that is of the glass structural component (100) and that is away from the glass substrate (10) is 14 GPa or higher at an indentation depth greater than 150 nm.

17. The glass structural component according to any one of claims 1 to 16, wherein an average transmittance of the glass structural component (100) in a visible light region is 88% or higher.

18. The glass structural component according to any one of claims 1 to 17, wherein a color coordinate offset value △E of the glass structural component (100) relative to the glass substrate (10) is less than 1.5.

19. An electronic device (1000), comprising a housing assembled outside the electronic device (1000) and a circuit board located inside the housing, wherein the housing comprises the glass structural component (100) according to any one of claims 1 to 18.

20. The electronic device according to claim 19, wherein the housing comprises a display cover plate (101) assembled on a front side of the electronic device (1000) and a rear cover 102 assembled on a rear side of the electronic device (1000), and the display cover plate (101) and/or the rear cover (102) use/uses the glass structural component (100).

21. The electronic device according to claim 19 or 20, wherein the electronic device (1000) further comprises a camera assembly (2) located inside the housing, the housing comprises a camera protection cover plate (103), the camera protection cover plate (103) covers the camera assembly (2), and the camera protection cover plate (103) uses the glass structural component (100).
